# EUROPEAN PATENT SPECIFICATION

(11) **EP 3 314 771 B1**
(45) Date of publication and mention of the grant of the patent: **17.01.2024**
(21) Application number: 16729422.2
(22) Date of filing: 25.05.2016
(51) Int. Cl.: H04B 1/44, H04L 5/00

(54) **SIMPLIFIED MULTI-BAND/CARRIER CARRIER AGGREGATION RADIO FREQUENCY FRONT-END BASED ON FREQUENCY-SHIFTED ANTENNAS**
VEREINFACHTE MEHRBAND-/TRÄGER-TRÄGERAGGREGATIONSRADIOFREQUENZ-FRONTEND AUF DER GRUNDLAGE VON FREQUENZVERSCHOBENEN ANTENNEN
FRONTAL RADIOFRÉQUENCE SIMPLIFIÉ MULTI-BANDE/MULTI-PORTEUSE À AGRÉGATION DE PORTEUSES, BASÉ SUR DES ANTENNES DÉCALÉES EN FRÉQUENCE

(30) Priority: 25.06.2015 US 201514751018
(43) Date of publication of application: 02.05.2018
(73) Proprietor: Qualcomm Incorporated, San Diego, CA 92121-1714 (US)
(72) Inventor: SAHOTA, Gurkanwal Singh, San Diego, California 92121-1714 (US)
(74) Representative: Wagner & Geyer
(86) International application number: PCT/US2016/034164
(87) International publication number: WO 2016/209515

(56) References cited:
- WO-A2-2009/066199
- US-A1- 2014 003 300
- US-A1- 2014 302 802
- US-A1- 2015 109 977

## Description

### CROSS REFERENCE TO RELATED APPLICATIONS

This application claims priority to U.S. Application No. 14/751,018, filed June 25, 2015.

### BACKGROUND

### Field

Certain aspects of the present disclosure generally relate to wireless communications and, more particularly, to a simplified multi-band/multi-carrier carrier aggregation radio frequency front-end based on multiple frequency-shifted antennas.

### Background

Wireless communication networks are widely deployed to provide various communication services such as telephony, video, data, messaging, broadcasts, and so on. Such networks, which are usually multiple access networks, support communications for multiple users by sharing the available network resources. For example, one network may be a 3G (the third generation of mobile phone standards and technology) system, which may provide network service via any one of various 3G radio access technologies (RATs) including EVDO (Evolution-Data Optimized), 1×RTT (1 times Radio Transmission Technology, or simply 1x), W-CDMA (Wideband Code Division Multiple Access), UMTS-TDD (Universal Mobile Telecommunications System - Time Division Duplexing), HSPA (High Speed Packet Access), GPRS (General Packet Radio Service), or EDGE (Enhanced Data rates for Global Evolution). The 3G network is a wide area cellular telephone network that evolved to incorporate high-speed internet access and video telephony, in addition to voice calls. Furthermore, a 3G network may be more established and provide larger coverage areas than other network systems. Such multiple access networks may also include code division multiple access (CDMA) systems, time division multiple access (TDMA) systems, frequency division multiple access (FDMA) systems, orthogonal frequency division multiple access (OFDMA) systems, single-carrier FDMA (SC-FDMA) networks, 3^{rd} Generation Partnership Project (3GPP) Long Term Evolution (LTE) networks, and Long Term Evolution Advanced (LTE-A) networks.

A wireless communication network may include a number of base stations that can support communication for a number of mobile stations. A mobile station (MS) may communicate with a base station (BS) via a downlink and an uplink. The downlink (or forward link) refers to the communication link from the base station to the mobile station, and the uplink (or reverse link) refers to the communication link from the mobile station to the base station. A base station may transmit data and control information on the downlink to a mobile station and/or may receive data and control information on the uplink from the mobile station.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-in-single-out, multiple-in-single-out or a multiple-in-multiple-out (MIMO) system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where *N_{S}* ≤ min{*N_{T}*, *N_{R}*}. Each of the *N_{S}* independent channels corresponds to a dimension. The MIMO system can provide improved performance (e.g., higher throughput and/or greater reliability) if the additional dimensionalities created by the multiple transmit and receive antennas are utilized.

A MIMO system may support time division duplex (TDD) and/or frequency division duplex (FDD) systems. In a TDD system, the forward and reverse link transmissions are on the same frequency region so that the reciprocity principle allows the estimation of the forward link channel from the reverse link channel. This enables the base station to extract transmit beamforming gain on the forward link when multiple antennas are available at the base station. In an FDD system, forward and reverse link transmissions are on different frequency regions.

A carrier aggregation (CA) technique based on employing multiple concurrent carriers within a band can be utilized in LTE-A systems in order to further increase the communication bandwidth. Furthermore, CA can be used for both FDD and TDD systems. To support the ever-growing demand for a higher communication bandwidth, the number of receiving (RX) and transmitting (TX) CA band combinations continues to increase. This results in a more complicated radio frequency (RF) front-end of a wireless communication device calling for specialized acoustic filters. However, employing special components can limit supplier diversity and lead to additional RF front-end loss in RX/TX paths. In addition, the existing solutions for RF front-ends that utilize the CA technique do not incorporate bands being proposed for future deployments, such as bands in the unlicensed part of the LTE spectrum.

US 2014/003300 A1 discloses techniques for supporting data transmission and reception on multiple bands for carrier aggregation. In an exemplary design, an apparatus (e.g., a wireless device) includes first and second antenna interface circuits coupled to first and second antennas, respectively. The first antenna interface circuit includes a first transmit (TX) filter for a first band, which may be part of a first triplexer or duplexer. The first TX filter filters a first radio frequency (RF) signal prior to transmission via the first antenna. The second antenna interface circuit includes a second TX filter for a second band, which may be part of a second triplexer or duplexer. The second TX filter filters a second RF signal prior to transmission via the second antenna. The first and second RF signals may be transmitted simultaneously on the first and second bands for carrier aggregation.

US 2015/109977 A1 discloses a method and apparatus supporting carrier aggregation. The apparatus includes a first antenna configured to transmit or receive signals in both a first high frequency band and a first low frequency band and a second antenna configured to transmit or receive signals in both a second high frequency band and a second low frequency band. At least one of the first high frequency band and the second high frequency band or the first low frequency band and the second low frequency band are different frequency bands for carrier aggregation. The apparatus may also include a third antenna and a multiband filter. The third antenna may be configured to receive signals in both the first and second high frequency bands or both the first and second low frequency bands. The multiband filter may be configured to filter the signals received by the third antenna.

US 2014/302802 A1 also discloses related prior art.

### SUMMARY

Certain aspects of the present disclosure generally relate to using separate antennas at a radio frequency front-end (RFFE) of a wireless communication device for transmission and reception on partially overlapping bands based on carrier aggregation, for example, which may permit implementation of simpler filters in the RFFE.

According to certain aspects, the first bandwidth is in the first frequency range. The second bandwidth may be in the second frequency range.
The invention is defined by the independent claims. The dependent claims define advantageous embodiments.

According to certain aspects, the first bandwidth equals the second bandwidth.

According to certain aspects, at least one of the first circuit block or the second circuit block supports carrier aggregation using multiple component carriers in at least one of the first bandwidth or the second bandwidth, respectively.

According to certain aspects, the first and second bandwidths range between 1400 MHz and 2800 MHz.

According to certain aspects, the first bandwidth includes three component carriers for the transmission. In this case, the first circuit block may include a triplexer configured to process the one or more first signals for the transmission based on carrier aggregation using the three component carriers.

According to certain aspects, the second bandwidth includes three component carriers for the reception. In this case, the second circuit block may include a triplexer configured to process the one or more second signals for the reception based on carrier aggregation using the three component carriers.

According to certain aspects, the apparatus further includes a third circuit block coupled to the transceiver and configured to process one or more third signals for at least one of transmission or reception over a third bandwidth via the first antenna. The third bandwidth having frequencies lower than frequencies of the first bandwidth. For certain aspects, the apparatus further includes a fourth circuit block coupled to the transceiver and configured to process one or more fourth signals for at least one of transmission or reception over a fourth bandwidth via the second antenna. The fourth bandwidth having frequencies higher than frequencies of the second bandwidth. For certain aspects, at least one of the third circuit block or the fourth circuit block supports carrier aggregation using multiple component carriers in at least one of the third bandwidth or the fourth bandwidth, respectively. For certain aspects, the apparatus further includes a first diplexer coupled to the first antenna and configured to interface the first circuit block and the third circuit block with the first antenna and a second diplexer coupled to the second antenna and configured to interface the second circuit block and the fourth circuit block with the second antenna. For certain aspects, the third bandwidth ranges between 700 MHz and 900 MHz, and the fourth bandwidth ranges between 3.4 GHz and 6 GHz. For certain aspects, the third bandwidth includes two component carriers for at least one of the transmission or the reception, and the third circuit block includes a quadplexer configured to process the one or more third signals for the at least one of the transmission or the reception based on carrier aggregation using the two component carriers. For certain aspects, the fourth circuit block includes one or more filters configured for at least one of transmission or reception over the fourth bandwidth and a switching circuit configured to switch, within the fourth bandwidth, the at least one of the transmission or the reception from Ultra High frequency Band (UHB)-based communication to Long Term Evolution/Unlicensed (LTEU) Time Division Duplex (TDD)-based communication. In this case, the fourth circuit block may further include one or more passive duplexers configured to split the LTEU TDD-based communication and the UHB-based communication over bands of the fourth bandwidth.

According to certain aspects, the first antenna is disposed at a first side of the apparatus. The second antenna may be placed at a second side of the apparatus opposite the first side.

According to certain aspects, the first antenna has the same size as the second antenna. For other aspects, the first antenna and the second antenna have different sizes (e.g., the second antenna is smaller than the first antenna).

According to certain aspects, the apparatus further includes a third antenna configured to support communications in the first frequency range and a fourth antenna configured to support communications in the second frequency range. For certain aspects, the apparatus further includes a third circuit block that replicates the first circuit block coupled to the transceiver and configured to process one or more third signals for transmission over the first bandwidth via the third antenna. The apparatus may also further include a fourth circuit block that replicates the second circuit block coupled to the transceiver and configured to process one or more fourth signals for reception over the second bandwidth via the fourth antenna.

Certain aspects of the present disclosure provide a method for wireless communications.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a diagram of an example wireless communications network, in accordance with certain aspects of the present disclosure.
FIG. 2 is a block diagram of an example access point (AP) and example user terminals, in accordance with certain aspects of the present disclosure.
FIG. 3 is a block diagram of an example radio frequency (RF) front-end of a wireless communication device, in accordance with certain aspects of the present disclosure.
FIG. 4 is a block diagram of an example low-band transmitting/receiving (TX/RX) module that may be included in the RF front-end from FIG. 3, in accordance with certain aspects of the present disclosure.
FIG. 5 is a block diagram of an example mid-band/high-band TX module that may be included in the RF front-end from FIG. 3, in accordance with certain aspects of the present disclosure.
FIG. 6 is a block diagram of an example mid-band/high-band RX module that may be included in the RF front-end from FIG. 3, in accordance with certain aspects of the present disclosure.
FIG. 7 is a block diagram of an example ultra-high-band/high-band TX module that may be included in the RF front-end from FIG. 3, in accordance with certain aspects of the present disclosure.
FIG. 8 illustrates example antenna placement on a wireless communication device comprising the RF front-end from FIG. 3, for example, in accordance with certain aspects of the present disclosure.
FIG. 9 is a flow diagram of example operations for processing signals in an RF front-end from FIG. 3, in accordance with certain aspects of the present disclosure.

### DETAILED DESCRIPTION

Aspects of the present disclosure support utilizing, at a radio frequency (RF) front-end of a wireless communication device, an antenna (and associated subsystem) for communications from the wireless communication device in a first frequency range and another separate antenna (and associated subsystem) for communications in a second frequency range, wherein the second frequency range may partially overlap with the first frequency range. The usage of separate antennas for communications (e.g., transmission and reception) on overlapping frequency ranges may allow implementation of simpler acoustic filters at the RF front-end compared to the case when transmission and reception on overlapping bands are performed by a common subsystem of a single antenna of the RF front-end.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

The techniques described herein may be used in combination with various wireless technologies such as Code Division Multiple Access (CDMA), Orthogonal Frequency Division Multiplexing (OFDM), Time Division Multiple Access (TDMA), Spatial Division Multiple Access (SDMA), Single Carrier Frequency Division Multiple Access (SC-FDMA), and so on. Multiple user terminals can concurrently transmit/receive data via different (1) orthogonal code channels for CDMA, (2) time slots for TDMA, or (3) sub-bands for OFDM. A CDMA system may implement IS-2000, IS-95, IS-856, Wideband-CDMA (W-CDMA), or some other standards. An OFDM system may implement Institute of Electrical and Electronics Engineers (IEEE) 802.11, IEEE 802.16, Long Term Evolution (LTE), or some other standards. A TDMA system may implement GSM or some other standards. These various standards are known in the art.

Although particular aspects are described herein, many variations and permutations of these aspects fall within the scope of the disclosure. Although some benefits and advantages of the preferred aspects are mentioned, the scope of the disclosure is not intended to be limited to particular benefits, uses or objectives. Rather, aspects of the disclosure are intended to be broadly applicable to different technologies, system configurations, networks and protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

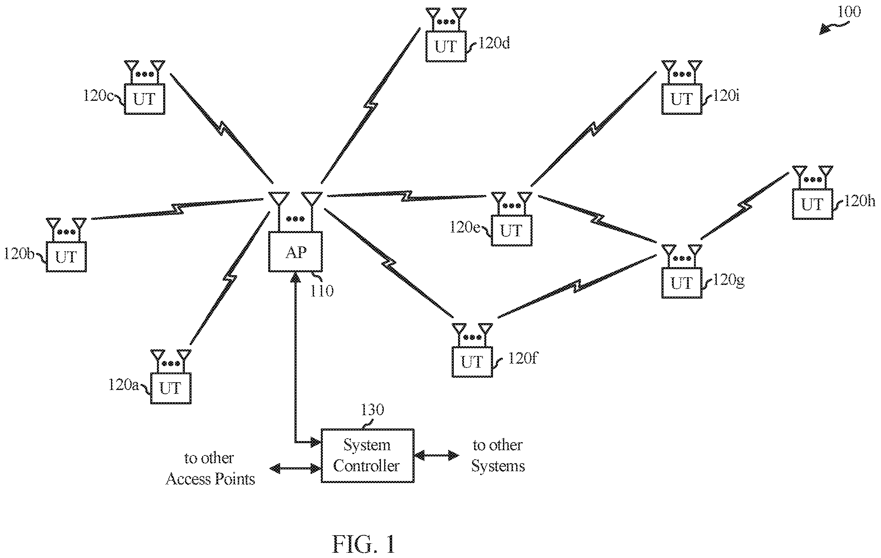

FIG. 1 illustrates a wireless communications system 100 with access points and user terminals, in which aspects of the present disclosure may be practiced. For simplicity, only one access point 110 is shown in FIG. 1. An access point (AP) is generally a fixed station that communicates with the user terminals and may also be referred to as a base station (BS), an evolved Node B (eNB), or some other terminology. A user terminal (UT) may be fixed or mobile and may also be referred to as a mobile station (MS), an access terminal, user equipment (UE), a station (STA), a client, a wireless device, or some other terminology. A user terminal may be a wireless device, such as a cellular phone, a personal digital assistant (PDA), a handheld device, a wireless modem, a laptop computer, a tablet, a personal computer, etc.

Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

System 100 employs multiple transmit and multiple receive antennas for data transmission on the downlink and uplink. Access point 110 may be equipped with a number *Nₐₚ* of antennas to achieve transmit diversity for downlink transmissions and/or receive diversity for uplink transmissions. A set *Nᵤ* of selected user terminals 120 may receive downlink transmissions and transmit uplink transmissions. Each selected user terminal transmits user-specific data to and/or receives user-specific data from the access point. In general, each selected user terminal may be equipped with one or multiple antennas (i.e., *Nᵤₜ* ≥ 1). The *Nᵤ* selected user terminals can have the same or different number of antennas.

Wireless system 100 may be a time division duplex (TDD) system or a frequency division duplex (FDD) system. For a TDD system, the downlink and uplink share the same frequency band. For an FDD system, the downlink and uplink use different frequency bands. System 100 may also utilize a single carrier or multiple carriers for transmission. Each user terminal may be equipped with a single antenna (e.g., in order to keep costs down) or multiple antennas (e.g., where the additional cost can be supported).

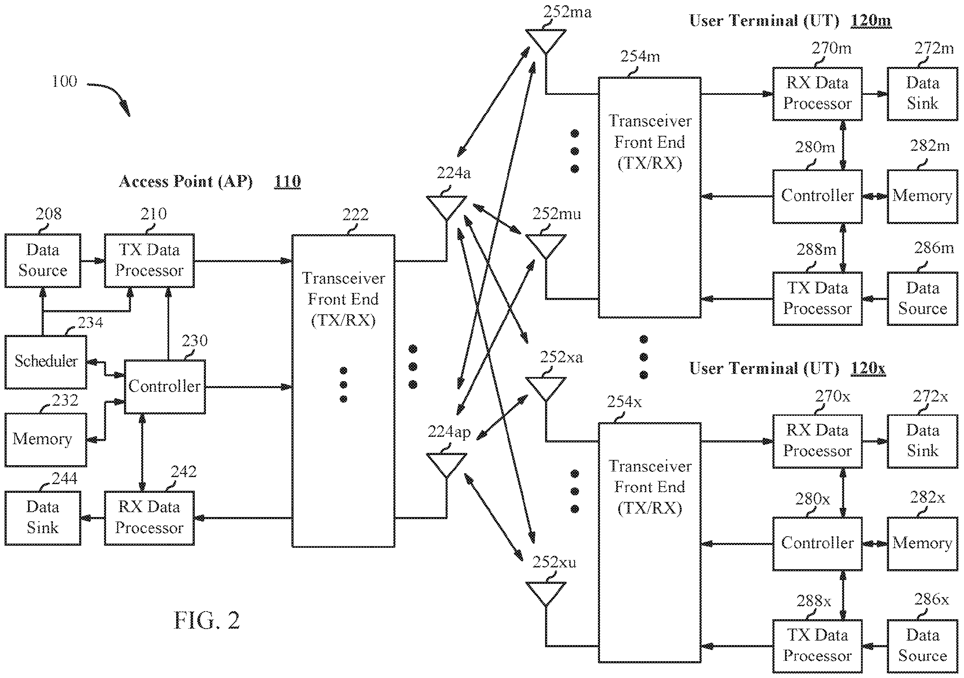

FIG. 2 shows a block diagram of access point 110 and two user terminals 120m and 120x in wireless system 100. Access point 110 is equipped with *Nₐₚ* antennas 224a through 224ap. User terminal 120m is equipped with *N_{ut,m}* antennas 252ma through 252mu, and user terminal 120x is equipped with *N_{ut,x}* antennas 252xa through 252xu. Access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a frequency channel, and a "receiving entity" is an independently operated apparatus or device capable of receiving data via a frequency channel. In the following description, the subscript "*dn*" denotes the downlink, the subscript "*up*" denotes the uplink, *Nᵤₚ* user terminals are selected for simultaneous transmission on the uplink, *N_{dn}* user terminals are selected for simultaneous transmission on the downlink, *Nᵤₚ* may or may not be equal to *N_{dn},* and *Nᵤₚ* and *N_{dn}* may be static values or can change for each scheduling interval. Beam-steering or some other spatial processing technique may be used at the access point and user terminal.

On the uplink, at each user terminal 120 selected for uplink transmission, a TX data processor 288 receives traffic data from a data source 286 and control data from a controller 280. TX data processor 288 processes (e.g., encodes, interleaves, and modulates) the traffic data {*dᵤₚ*} for the user terminal based on the coding and modulation schemes associated with the rate selected for the user terminal and provides a data symbol stream {*sᵤₚ*}for one of the *N_{ut,m}* antennas. A transceiver front end (TX/RX) 254 (also known as a radio frequency front end (RFFE)) receives and processes (e.g., converts to analog, amplifies, filters, and frequency upconverts) a respective symbol stream to generate an uplink signal. The transceiver front end 254 may also route the uplink signal to one of the *N_{ut,m}* antennas for transmit diversity via an RF switch, for example. The controller 280 may control the routing within the transceiver front end 254.

A number *Nᵤₚ* of user terminals may be scheduled for simultaneous transmission on the uplink. Each of these user terminals transmits its set of processed symbol streams on the uplink to the access point.

At access point 110, *Nₐₚ* antennas 224a through 224ap receive the uplink signals from all *Nᵤₚ* user terminals transmitting on the uplink. For receive diversity, a transceiver front end 222 may select signals received from one of the antennas 224 for processing. For certain aspects of the present disclosure, a combination of the signals received from multiple antennas 224 may be combined for enhanced receive diversity. The access point's transceiver front end 222 also performs processing complementary to that performed by the user terminal's transceiver front end 254 and provides a recovered uplink data symbol stream. The recovered uplink data symbol stream is an estimate of a data symbol stream {*sᵤₚ*} transmitted by a user terminal. An RX data processor 242 processes (e.g., demodulates, deinterleaves, and decodes) the recovered uplink data symbol stream in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for *N_{dn}* user terminals scheduled for downlink transmission, control data from a controller 230 and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 may provide a downlink data symbol streams for one of more of the *N_{dn}* user terminals to be transmitted from one of the *Nₐₚ* antennas. The transceiver front end 222 receives and processes (e.g., converts to analog, amplifies, filters, and frequency upconverts) the symbol stream to generate a downlink signal. The transceiver front end 222 may also route the downlink signal to one or more of the *Nₐₚ* antennas 224 for transmit diversity via an RF switch, for example. The controller 230 may control the routing within the transceiver front end 222.

At each user terminal 120, *N_{ut,m}* antennas 252 receive the downlink signals from access point 110. For receive diversity at the user terminal 120, the transceiver front end 254 may select signals received from one of the antennas 252 for processing. For certain aspects of the present disclosure, a combination of the signals received from multiple antennas 252 may be combined for enhanced receive diversity. The user terminal's transceiver front end 254 also performs processing complementary to that performed by the access point's transceiver front end 222 and provides a recovered downlink data symbol stream. An RX data processor 270 processes (e.g., demodulates, deinterleaves, and decodes) the recovered downlink data symbol stream to obtain decoded data for the user terminal.

Those skilled in the art will recognize the techniques described herein may be generally applied in systems utilizing any type of multiple access schemes, such as TDMA, SDMA, Orthogonal Frequency Division Multiple Access (OFDMA), CDMA, SC-FDMA, and combinations thereof.

In order to support the ever-growing demand for a higher communication bandwidth, the number of RX and TX carrier aggregation (CA) band combinations will continue to increase in current and future technologies and advancements. This may result in a more complicated radio frequency (RF) front-end of a wireless communication device (e.g., the RF front-end of the access point 110 and/or the RF front-end of the user terminal 120 from FIGs. 1-2), which may call for specialized acoustic filters. For example, in the case of a two-carrier aggregation combination for RX over bands 2 and 4, the RF front-end may utilize a quadplexer filter in place of a duplexer filter used for a single-carrier RX/TX. In future advancements, the CA technique with three inter-band carriers may be employed. In this case, hexaplexer filters may be utilized for RX/TX in three separate bands (e.g., bands 2, 4, and 30 or bands 1, 3, and 7).

Employing special filter components of the RF front-end may limit supplier diversity and may lead to additional RF front-end loss in RX/TX paths, thus reducing sensitivity and TX power. Furthermore, the existing solutions for RF front-ends that utilize the CA technique do not incorporate into the overall architecture bands being proposed for future deployments, such as bands 42/43 and bands in the unlicensed part of the LTE spectrum denoted as Long Term Evolution/Unlicensed (LTEU).

### EXAMPLE RF FRONT-END BASED ON FREQUENCY-SHIFTED ANTENNAS

Aspects of the present disclosure provide an RF front-end of a wireless communication device that employs two different antennas and their separate subsystems for primary communication, wherein the antennas may be frequency shifted (i.e., the antennas may have different operational bandwidths, which may partially overlap). In some aspects of the present disclosure, two additional antennas (e.g., identical to the two antennas used for primary communication) may be included in the RF front-end for achieving diversity and downlink/uplink multiple-input, multiple-output (MIMO) communication capability.

In accordance with aspects of the present disclosure, a first antenna of an RF front-end of a wireless communication device may cover a communication bandwidth between 700 MHz and 2800 MHz. In some aspects, the first antenna (and an associated subsystem) may be configured for RX/TX over low-bands (e.g., bands between 700 MHz and 900 MHz). Further, in some aspects, the first antenna (and the associated subsystem) may be configured for TX over mid-bands (e.g., bands between 1400 MHz and 2100 MHz) and high-bands (e.g., bands between 2300 MHz and 2800 MHz).

In accordance with aspects of the present disclosure, a second antenna (e.g., different from the first antenna) of the RF front-end of the wireless communication device may cover a communication bandwidth between 1400 MHz and 6 GHz, i.e., the communication bandwidth that partially overlaps with the communication bandwidth of the first antenna. In some aspects, the second antenna (and an associated subsystem) may be configured for RX over mid-bands/high bands (e.g., bands between 1400 MHz and 2800 MHz). Further, in some aspects, the second antenna (and the associated subsystem) may be configured for RX/TX over ultra-high bands and LTEU bands (e.g., bands between 3.4 GHz and 6 GHz). In other aspects, both the first and second antennas are broadband antennas capable of signal exchange in a bandwidth from 700 MHz to 6 GHz.

Aspects of the present disclosure may utilize separate antennas at the RF front-end for mid-band/high-band TX (e.g., the first antenna and its associated subsystem) and for mid-band/high-band RX (e.g., the second antenna and its associated subsystem). In an exemplary case of three-carrier inter-band CA technique, the approach based on separate antennas for RX and TX over mid-bands/high-bands may allow utilizing a triplexer filter instead of a hexaplexer filter, which may reduce insertion loss (IL) and implementation cost (e.g., area size and power dissipation) at the RF front-end. Furthermore, this approach may reduce filter selectivity constraints since separate antennas for mid-band/high-band TX and RX may provide sufficient isolation between TX and RX communication paths.

In some aspects of the present disclosure, the architecture and modules associated with the first and second antennas (e.g., primary communication antennas) may be replicated and used for an additional pair of antennas (e.g., secondary communication antennas) implemented at the same RF front-end. In an aspect, the secondary communication antennas identical to the primary communication antennas may be utilized for achieving antenna diversity. In another aspect, modules (subsystems) associated with the secondary antennas being identical to modules (subsystems) associated with the primary antennas of the RF front-end may be utilized for RX/TX in the case of uplink carrier aggregation.

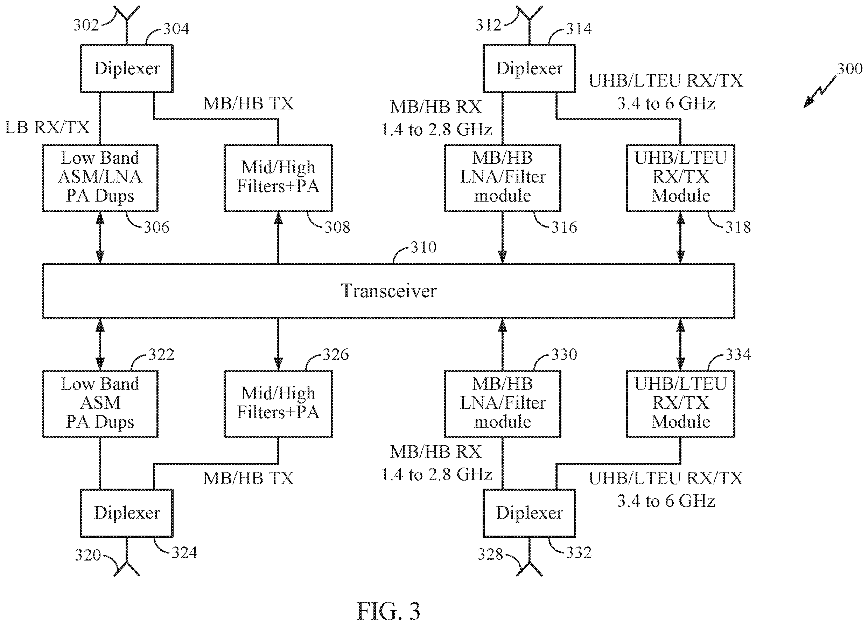

FIG. 3 is a block diagram of an example RF front-end 300 of a wireless communication device, in accordance with certain aspects of the present disclosure. In some aspects of the present disclosure, the wireless device with the RF front-end 300 may correspond to the access point 110 and/or the user terminal 120 from FIGs. 1-2. As illustrated in FIG. 3, the RF front-end 300 may comprise a transceiver 310. In some aspects of the present disclosure, the transceiver 310 may correspond to the transceiver 222 from FIG. 2 of the access point 110, and/or to any of the transceivers 254 from FIG. 2 of the user terminals 120.

In some aspects, as discussed, a first antenna 302 may be configured to cover a bandwidth between 700 MHz and 2800 MHz and may be employed for low-band RX/TX and for mid-band/high-band TX. As illustrated in FIG. 3, the first antenna 302 may be interfaced through a diplexer 304 with a module 306 and a module 308, both being connected with the transceiver 310. According to some aspects of the present disclosure, the module 306 may be configured for RX/TX over low bands (e.g., bands between 700 MHz and 900 MHz). In some aspects, the module 306 may comprise a low-band antenna switch module (ASM), one or more low-band power amplifiers (PAs) for the TX path, one or more low-noise amplifiers (LNAs) for the RX path, and a duplexer or a quadplexer filter interfacing the ASM with the PA(s) and LNA(s). The communication filter based on the duplexer or the quadplexer may be selected depending, for example, on CA combination used for communication over the low bands.

According to some aspects of the present disclosure, the module 308 may be configured for TX over mid-bands/high bands (e.g., bands between 1400 MHz and 2800 MHz). In some aspects, the module 308 may comprise a mid-band/high-band ASM, mid-band/high-band PAs, and mid-band/high-band TX filters. In an aspect, in the case of a three-carrier CA band-combination, the mid-band/high-band TX filters may comprise triplexers. Thus, the usage of hexaplexers may be avoided, since the module 308 is configured for TX on mid-bands/high bands. According to aspects of the present disclosure, the RX path over mid-bands/high bands may be implemented separately on another subsystem associated with another antenna of the RF front-end. This allows for antenna isolation to attenuate the TX signal entering the antenna on which an RX signal is being received.

According to aspects of the present disclosure, a second antenna 312 of the RF front-end 300 may be configured to cover a bandwidth between 1400 MHz and 6 GHz. In some aspects, as discussed, the second antenna 312 may be employed for mid-band/high-band RX only (e.g., RX on bands between 1400 MHz and 2800 MHz). Further, as discussed, the second antenna 312 may be configured for ultra-high-band (UHB)-based and LTEU-based RX/TX (e.g., RX/TX over bands between 3.4 GHz and 6 GHz, such as bands 42/43 and 5 GHz WiFi band).

As illustrated in FIG. 3, the second antenna 312 may be interfaced through a diplexer 314 with a module 316 and a module 318, both being connected with the transceiver 310. According to some aspects of the present disclosure, the module 316 being placed in front of the transceiver 310 may be configured for RX over mid-bands/high bands (e.g., RX over bands between 1400 MHz and 2800 MHz). In some aspects, the module 316 may comprise a mid-band/high-band ASM, RX single-carrier, dual-carrier, or triple-carrier filters (e.g., depending on a number of RX carriers in mid-bands/high bands) and mid-band/high-band LNAs. In an aspect, in the case of three-carrier CA band-combinations, the mid-band/high-band RX filters may comprise triplexers. Thus, the usage of hexaplexers may be avoided, since the module 316 may be configured for TX on mid-bands/high bands. As discussed, the TX path over the mid-bands/high bands may be implemented separately on a subsystem (e.g., the module 308 interfaced with the diplexer 304) associated with the first antenna 302 of the RF front-end 300.

In some aspects, as discussed, the module 318 may be configured for RX/TX using UHB-based and LTEU-TDD-based communications and corresponding bands (e.g., bands between 3.4 GHz and 6 GHz). In an aspect, the module 318 may comprise an ASM, UHB/LTEU filters and switch modules (e.g., for switching from UHB-based to LTEU-TDD-based communication and vice-versa), LNAs (e.g., for RX path), and PAs (e.g., for TX path).

In an aspect of the present disclosure, the first antenna 302 may be placed on the bottom of the wireless communication device, whereas the second antenna 312 may be placed on the top of the wireless communication device. In some aspects, the first antenna 302 and the second antenna 312 may be of different sizes. In an aspect, the second antenna 312 may be smaller than the first antenna 302 due to shorter signal wavelengths processed by the second antenna 312. As discussed, the operational bandwidth of the second antenna 312 may be substantially higher than the operational bandwidth of the first antenna 302. For example, the lowest signal frequency processed by the second antenna 312 may be 1400 MHz (i.e., the second antenna processes high frequency signals with wavelengths shorter on average than wavelengths of signals being processed by the first antenna 302).

According to aspects of the present disclosure, identical antennas as the first and second antennas 302 and 312 may be employed at the RF front-end 300 for achieving communication (antenna) diversity, and/or for usage in uplink/downlink CA applications. In an aspect of the present disclosure, a symmetric architecture may be employed at the RF front-end 300, where the aforementioned subsystems associated with the first and second (primary) antennas 302 and 312 may be also designed for an additional pair of (secondary) antennas identical to the first and second antennas. In an aspect of the present disclosure, the two identical pairs of primary and secondary antennas at the RF front-end 300 may provide antenna diversity and downlink/uplink MIMO communication capability for the wireless communication device.

As illustrated in FIG. 3, a first secondary antenna 320 employed at the RF front-end 300 may be identical (e.g., in size and shape) to the first primary antenna 302. Hence, the first secondary antenna 320 may be also configured to cover the bandwidth between 700 MHz and 2800 MHz and may be employed for low-band RX/TX and for mid-band/high-band TX.

In some aspects of the present disclosure, a module 322 connected with the transceiver 310 and interfaced through a diplexer 324 with the first secondary antenna 320 may be identical (e.g., with respect to included components, but not necessarily with respect to layout thereof) to the module 306 interfaced with the first primary antenna 302 (e.g., the module 322 may be configured for RX/TX over low bands, such as bands between 700 MHz and 900 MHz). Furthermore, an additional module 326 connected with the transceiver 310 and interfaced through the diplexer 324 with the first secondary antenna 320 may be identical to the module 308 interfaced with the first primary antenna 302 (e.g., the module 326 may be configured for TX only over mid-bands/high-bands, such as bands between 1400 MHz and 2800 MHz). In some aspects, the modules 308 and 326 may be identical with respect to the components included, but not necessarily with respect to layout thereof.

As illustrated in FIG. 3, another (second) secondary antenna 328 employed at the RF front-end 300 may be identical (e.g., in dimensions) to the second primary antenna 312. Hence, the second secondary antenna 328 may be also configured to cover the bandwidth between 1400 MHz and 6 GHz. In an aspect, the second secondary antenna 328 may be used for mid-band/high-band RX (e.g., RX over bands between 1400 MHz and 2800 MHz). Furthermore, the second secondary antenna 328 may be configured for RX/TX using UHB-based and LTEU-based communications (e.g., communications over bands between 3.4 GHz and 6 GHz, such as bands 42/43 and 5GHz WiFi bands).

In some aspects of the present disclosure, a module 330 connected with the transceiver 310 and interfaced through a diplexer 332 with the second secondary antenna 328 may be identical to the module 316 interfaced with the second primary antenna 312 (e.g., the module 330 may be configured for RX over mid-bands/high bands, such as bands between 1400 MHz and 2800 MHz). Furthermore, an additional module 334 connected with the transceiver 310 and interfaced through the diplexer 332 with the second secondary antenna 328 may be identical to the module 318 interfaced with the second primary antenna 312 (e.g., the module 334 may be configured for RX/TX over UHB and LTEU bands, such as bands between 3.4 GHz and 6 GHz). The modules 316 and 330 (and/or the modules 318 and 334) may be identical with respect to included components, but not necessarily with respect to layout thereof.

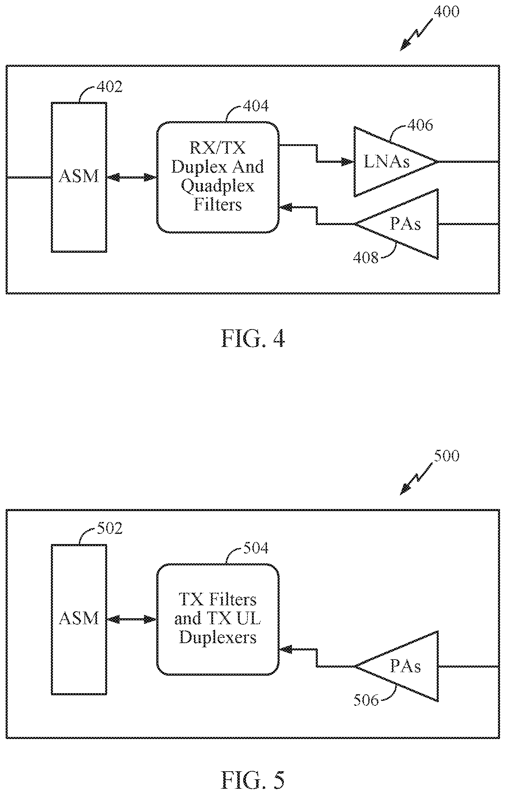

FIG. 4 is a block diagram of an example low-band RX/TX module 400, in accordance with certain aspects of the present disclosure. In some aspects of the present disclosure, the module 400 illustrated in FIG. 4 may correspond to the module 306 and/or to the module 322 from FIG. 3. As illustrated in FIG. 4, the low-band RX/TX module 400 may comprise a low-band ASM 402 (e.g., interfaced with the first primary antenna 302 or the first secondary antenna 320 from FIG. 3) and RX/TX duplex and/or quadplex filters 404 connected with one or more LNAs 406 (e.g., for RX path) and one or more PAs 408 (e.g., for TX path).

In an aspect of the present disclosure, in the case of a single-carrier RX/TX, the RX/TX filters 404 may comprise a duplex filter interfaced with one LNA 406 (e.g., for RX path) and with one PA 408 (e.g., for TX path). In another aspect, in the case of two-carrier CA combination, the RX/TX filters 404 may comprise a quadplex filter interfaced with two LNAs 406 (e.g., for RX path) and two PAs 408 (e.g., for TX path). Therefore, the number of ports at the ASM 402 and the number of LNAs 406 and PAs 408 may be chosen based on target carriers utilized for the CA technique. For example, in the case of a two-carrier CA combination, the low-band RX/TX module 400 may utilize four ports at the ASM 402 (e.g., two ports for RX and two ports for TX), while two LNAs 406 and two PAs 408 may be employed.

According to aspects of the present disclosure, usage of different CA combinations for low-bands may determine whether a duplexer or a quadplexer should be employed for the RX/TX filters 404. For example, as discussed, in the case of two-carrier CA combination (e.g., there are separate carriers in two different bands used for RX/TX), the RX/TX filters 404 may comprise a quadplexer. If a single carrier is used for RX/TX, then a duplex filter may be employed as the RX/TX filter 404.

FIG. 5 is a block diagram of an example mid-band/high-band TX module 500, in accordance with certain aspects of the present disclosure. In some aspects of the present disclosure, the mid-band/high-band TX module 500 may correspond to the module 308 and/or to the module 326 from FIG. 3. As illustrated in FIG. 5, the mid-band/high-band TX module 500 may comprise a mid-band/high-band ASM 502 (e.g., interfaced with the first primary antenna 302 or the first secondary antenna 320 from FIG. 3), TX filters and TX uplink (UL) duplexers 504, and PAs 506.

According to aspects of the present disclosure, the number of ports at the ASM 502 and the number of PAs 506 may be chosen based on target carriers utilized for the CA technique. In an aspect, the number of concurrent PAs 506 employed within the mid-band/high-band TX module 500 may be based on uplink CA specifications. For example, in the case of a three-carrier inter-band CA combination, three PAs 506 may be utilized for the concurrent transmission on three separate carriers.

In some aspects of the present disclosure, the TX filters 504 may be configured for signal transmission on mid-bands/high bands (e.g., on bands between 1400 MHz and 2800 MHz) over multiple carriers. Since RX over these bands may be separated and implemented on a different antenna subsystem (e.g., on the subsystem associated with the second antenna 312, as illustrated in FIG. 3), the implementation of TX filters 504 may avoid hexaplexers for a three-carrier CA combination. Instead of hexaplexers, as discussed, the TX filters 504 may utilize triplexers, which may significantly reduce implementation costs.

Because the RX path over mid-bands/high bands is separated from the TX path of the mid-band/high-band TX module 500 by antenna isolation (i.e., the RX path using the same bandwidth is implemented separately in a subsystem interfaced with a different antenna), mid-band/high-band filter Frequency Division Duplex (FDD) isolation/rejection specifications may be reduced. In this case, better antenna isolation may reduce filter constraints and decrease insertion loss (IL).

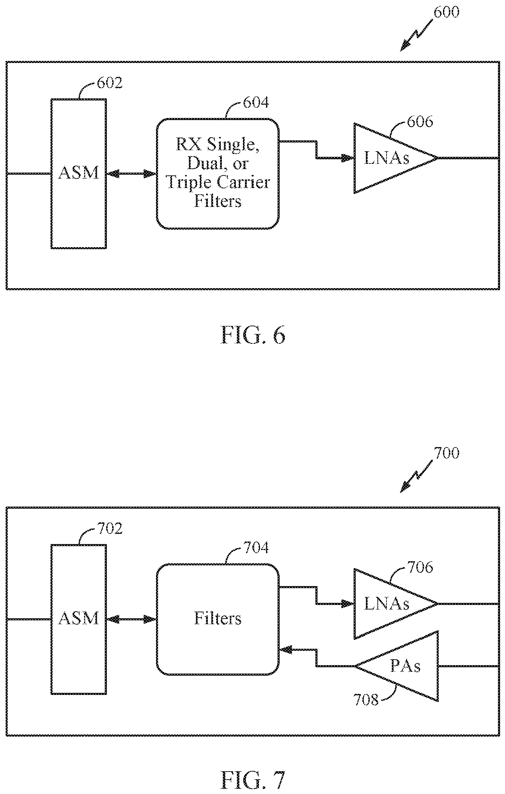

FIG. 6 is a block diagram of an example mid-band/high-band RX module 600, in accordance with certain aspects of the present disclosure. In some aspects of the present disclosure, the mid-band/high-band RX module 600 may correspond to the module 316 and/or to the module 330 from FIG. 3. As illustrated in FIG. 6, the mid-band/high-band RX module 600 may comprise a mid-band/high-band ASM 602 (e.g., interfaced with the second primary antenna 312 or the second secondary antenna 328 from FIG. 3); RX single-carrier, dual-carrier, or triple-carrier filters 604; and LNAs 606.

According to aspects of the present disclosure, the number of ports at the ASM 602 and the numbers of concurrent filters 604 and LNAs 606 may be determined based on CA specifications. For example, in the case of a three-carrier CA combination, triple-carrier filters 604 and three LNAs 606 may be utilized for concurrent reception.

In some aspects, the RX filters 604 may be configured for signal reception on mid-bands/high bands (e.g., bands between 1400 MHz and 2800 MHz) over multiple carriers by utilizing the CA technique. Since transmission over these same bands may be implemented separately on a different antenna subsystem (e.g., on a subsystem related to the first antenna 302 from FIG. 3 and utilizing the mid-band/high-band TX module 500 from FIG. 5), implementation of the RX filters 604 may avoid the usage of hexaplexers for, for example, a three-carrier CA configuration. As discussed, instead of hexaplexers, the RX filters 604 may utilize triplexers (e.g., triple-carrier filters), which may significantly reduce implementation costs.

FIG. 7 is a block diagram of an example Ultra-High-Band/High-Band (UHB/HB) RX/TX module 700, in accordance with certain aspects of the present disclosure. In some aspects, the module 700 may correspond to the module 318 and/or to the module 334 from FIG. 3. As illustrated in FIG. 7, the UHB/HB RX/TX module 700 may comprise an UHB/HB ASM 702 (e.g., interfaced with the second primary antenna 312 or the second secondary antenna 328 from FIG. 3) and RX/TX filters 704 connected with one or more LNAs 706 (e.g., for RX path) and one or more PAs 708 (e.g., for TX path).

According to aspects of the present disclosure, the number of ports at the ASM 702, the number and type of concurrent RX/TX filters 704, and the numbers of LNAs 706 and PAs 708 may be determined based on CA specifications. In an aspect of the present disclosure, passive diplexers may be employed as the RX/TX filters 704 to split LTEU and bands 42/43, which may provide better IL.

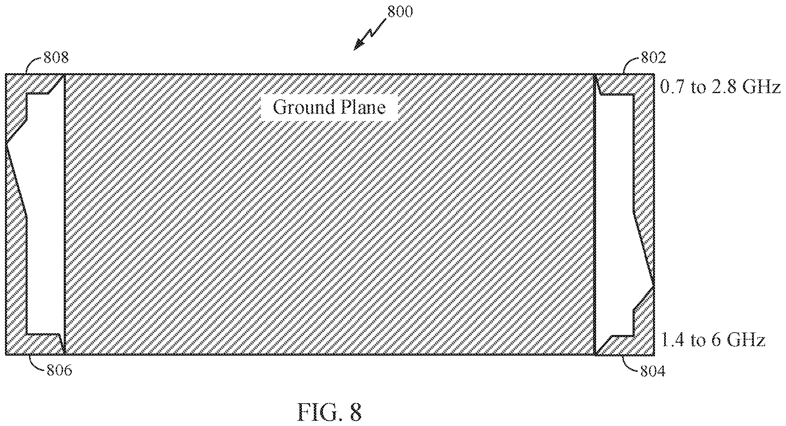

FIG. 8 illustrates an example antenna placement on a wireless communication device 800 (e.g., user terminal 120 from FIG. 2), in accordance with certain aspects of the present disclosure. As illustrated in FIG. 8, an antenna 802 (e.g., the first primary antenna 302 from FIG. 3) may be configured for an operational bandwidth between 700 MHz and 2.8 GHz, and this antenna 802 may be placed, for example, at the bottom of the wireless communication device 800. An antenna 804 (e.g., the second primary antenna 312 from FIG. 3) may be configured for an operational bandwidth between 1.4 GHz and 6 GHz, and this antenna 804 may be placed, for example, on the top of the wireless communication device 800. As illustrated in FIG. 8, the antenna 804 (e.g., the second primary antenna 312 from FIG. 3) may be of a smaller size than the antenna 802 (e.g., the first primary antenna 302 from FIG. 3) due to shorter signal wavelengths being processed by the antenna 804.

As further illustrated in FIG. 8, to achieve antenna diversity and downlink/uplink MIMO communication capability, secondary antennas 806 and 808 identical (e.g., in configuration) to the primary antennas 802 and 804 may be employed at the wireless communication device 800. In an aspect of the present disclosure, communication modules interfaced with the secondary antenna 806 may be identical to communication modules interfaced with the antenna 802. Furthermore, modules interfaced with the secondary antenna 808 may be identical to modules interfaced with the antenna 804.

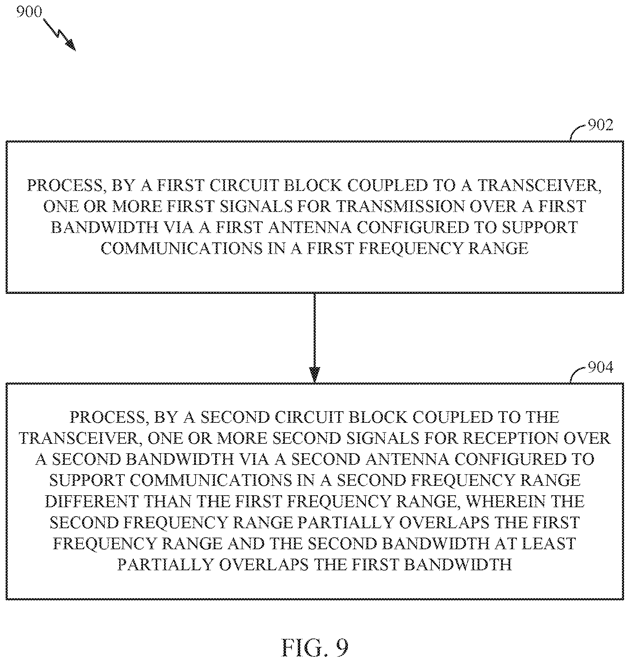

FIG. 9 is a flow diagram of example operations 900 for processing signals with frequency-shifted antennas, in accordance with certain aspects of the present disclosure. The operations 900 may be performed by the RF front-end 300 of FIG. 3, for example.

The operations 900 may begin, at 902, with a first circuit block (e.g., the module 308 in FIG. 3 and the module 500 in FIG. 5) coupled to a transceiver (e.g., the transceiver 310 in FIG. 3) processing one or more first signals for transmission over a first bandwidth via a first antenna (e.g., the antenna 302 in FIG. 3) configured to support communications in a first frequency range. At 904, a second circuit block (e.g., the module 316 in FIG. 3 and the module 600 in FIG. 6) coupled to the transceiver may process one or more second signals for reception over a second bandwidth via a second antenna (e.g., the antenna 312 in FIG. 3) configured to support communications in a second frequency range different than the first frequency range. In some aspects, the second frequency range may partially overlap the first frequency range, and the second bandwidth may at least partially overlap the first bandwidth.

In an aspect of the present disclosure, the first bandwidth may be within the first frequency range and the second bandwidth may be within the second frequency range. In an aspect, the first bandwidth may equal the second bandwidth. For example, as discussed, the first and second bandwidths may both range between 1400 MHz and 2800 MHz.

In some aspects of the present disclosure, at least one of the first circuit block or the second circuit block may support carrier aggregation using multiple component carriers in at least one of the first bandwidth or the second bandwidth, respectively. In an aspect, the first bandwidth may comprise three component carriers for the transmission, and the first circuit block (e.g., the module 500 from FIG. 5) may comprise a triplexer (e.g., the triplexer TX filter 504) configured to process the one or more first signals for the transmission based on carrier aggregation using the three component carriers. In another aspect, the second bandwidth may comprise three component carriers for the reception, and the second circuit block (e.g., the module 600 from FIG. 6) may comprise a triplexer (e.g., the triplexer RX filter 604) configured to process the one or more second signals for the reception based on carrier aggregation using the three component carriers.

In some aspects of the present disclosure, a third circuit block (e.g., the module 306 from FIG. 3 and/or the module 400 from FIG. 4) may be coupled to the transceiver and configured to process one or more third signals for at least one of transmission or reception over a third bandwidth via the first antenna. The third bandwidth may have frequencies lower than frequencies of the first bandwidth. Further, a fourth circuit block (e.g., the module 318 from FIG. 3 and/or the module 700 from FIG. 7) may be coupled to the transceiver and configured to process one or more fourth signals for at least one of transmission or reception over a fourth bandwidth via the second antenna. The fourth bandwidth may have frequencies higher than frequencies of the second bandwidth. In some aspects, as discussed, the third bandwidth may range between 700 MHz and 900 MHz, and the fourth bandwidth may range between 3.4 GHz and 6 GHz.

In some aspects of the present disclosure, as discussed, at least one of the third circuit block (e.g., the module 306 in FIG. 3) or the fourth circuit block (e.g., the module 318) may support carrier aggregation using multiple component carriers in at least one of the third bandwidth or the fourth bandwidth, respectively. In an aspect, a first diplexer (e.g., the diplexer 304) may be coupled to the first antenna (e.g., the antenna 302) and may be configured to interface the first circuit block (e.g., the module 308) and the third circuit block (e.g., the module 306) with the first antenna (e.g., the antenna 302). In addition, a second diplexer (e.g., the diplexer 314) may be coupled to the second antenna (e.g., the antenna 312) and may be configured to interface the second circuit block (e.g., the module 316) and the fourth circuit block (e.g., the module 318) with the second antenna (e.g., the antenna 312).

In an aspect of the present disclosure, the third bandwidth may comprise two component carriers for at least one of the transmission or the reception. The third circuit block (e.g., the module 400 from FIG. 4) may comprise a quadplexer (e.g., the quadplexer filter 404) configured to process the one or more third signals for the at least one of the transmission or the reception based on carrier aggregation using the two component carriers.

In some aspects of the present disclosure, the fourth circuit block (e.g., the module 700 from FIG. 7) may comprise one or more filters (e.g., the filters 704) configured for at least one of transmission or reception over the fourth bandwidth, and a switching circuit (e.g., the ASM 702) configured to switch, within the fourth bandwidth, the at least one of the transmission or the reception from the Ultra High frequency Band (UHB)-based communication to the Long Term Evolution/Unlicensed (LTEU) Time Division Duplex (TDD)-based communication. In an aspect, as discussed, the fourth circuit block (e.g., the module 700) may further comprise one or more passive duplexers (e.g., the duplex filters 704) configured to split the LTEU TDD-based communication and the UHB-based communication over bands of the fourth bandwidth.

In accordance with aspects of the present disclosure, the first antenna (e.g., the antenna 302 from FIG. 3 and the antenna 802 from FIG. 8) may be disposed at a first side (e.g., bottom side) of the apparatus (e.g., the wireless communication device 800 from FIG. 8), and the second antenna (e.g., the antenna 312 from FIG. 3 and the antenna 804 from FIG. 8) may be placed at a second side (e.g., top side) of the apparatus opposite the first side. In an aspect, as discussed, the first antenna and the second antenna may have different sizes.

In some aspects of the present disclosure, a third antenna (e.g., the antenna 320 from FIG. 3) may be configured to support communications in the first frequency range, and a fourth antenna (e.g., the antenna 328) may be configured to support communications in the second frequency range. A third circuit block (e.g., the module 326) that replicates the first circuit block (e.g., the module 308) may be coupled to the transceiver and configured to process one or more third signals for transmission over the first bandwidth via the third antenna. A fourth circuit block (e.g., the module 330) that replicates the second circuit block (e.g., the module 316) may be coupled to the transceiver and configured to process one or more fourth signals for reception over the second bandwidth via the fourth antenna.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

For example, means for transmitting may comprise a transmitter (e.g., the transceiver front end 254 of the user terminal 120 depicted in FIG. 2, the transceiver front end 222 of the access point 110 shown in FIG. 2, or the RF front-end 300 illustrated in FIG. 3) and/or an antenna (e.g., the antennas 252ma through 252mu of the user terminal 120m portrayed in FIG. 2, the antennas 224a through 224ap of the access point 110 illustrated in FIG. 2, or the antennas 302, 312, 320 and 328 of the RF front-end 300 depicted in FIG. 3). Means for receiving may comprise a receiver (e.g., the transceiver front end 254 of the user terminal 120 depicted in FIG. 2, the transceiver front end 222 of the access point 110 shown in FIG. 2, or the RF front-end 300 illustrated in FIG. 3) and/or an antenna (e.g., the antennas 252ma through 252mu of the user terminal 120m portrayed in FIG. 2, the antennas 224a through 224ap of the access point 110 illustrated in FIG. 2, or the antennas 302, 312, 320 and 328 of the RF front-end 300 depicted in FIG. 3). Means for processing first and/or second signals may comprise components from the RF front-end 300 depicted in FIG. 3.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" a list of items refers to any combination of those items, including single members. As an example, "at least one of: *a*, *b*, or c" is intended to cover: *a*, *b*, *c*, *a-b*, *a-c*, *b-c*, and *a-b-c*, as well as any combination with multiples of the same element (e.g., *a-a*, *a-a-a*, *a-a-b*, *a-a-c*, *a-b-b*, *α-c-c*, *b-b*, *b-b-b*, *b-b-c*, *c-c*, and *c-c-c* or any other ordering of *a*, *b*, and c).

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal, a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may be implemented with an ASIC (Application Specific Integrated Circuit) with the processor, the bus interface, the user interface in the case of an access terminal), supporting circuitry, and at least a portion of the machine-readable media integrated into a single chip, or with one or more FPGAs (Field Programmable Gate Arrays), PLDs (Programmable Logic Devices), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

It is to be understood that the claims are not limited to the precise configuration and components illustrated above. Various modifications, changes and variations may be made in the arrangement, operation and details of the methods and apparatus described above without departing from the scope of the claims.

## Claims

1. An apparatus for wireless communications, comprising:
a transceiver (310);
a first primary antenna (302) configured to support communications in a first frequency range;
a second primary antenna (312) configured to support communications in a second frequency range different than the first frequency range, wherein the second frequency range partially overlaps the first frequency range;
a first circuit block (308) coupled to the transceiver (310) and having a first multiplexer having filters (504) configured to process one or more first signals for only transmission over a first bandwidth in the first frequency range via the first primary antenna (302);
a second circuit block (316) coupled to the transceiver (310) and having a second multiplexer having filters (604) configured to process one or more second signals for only reception over a second bandwidth in the second frequency range via the second primary antenna (318), wherein the second bandwidth at least partially overlaps the first bandwidth;
a third circuit block (306) coupled to the transceiver (310) and having a third multiplexer having filters (404) configured to process one or more third signals for transmission and reception over a third bandwidth via the first primary antenna (302), the third bandwidth having frequencies lower than frequencies of the first bandwidth; and
a fourth circuit block (318) coupled to the transceiver (310) and having a fourth multiplexer having filters (704) configured to process one or more fourth signals for transmission and reception over a fourth bandwidth via the second primary antenna (318), the fourth bandwidth having frequencies higher than frequencies of the second bandwidth.

2. The apparatus of claim 1, wherein the first bandwidth equals the second bandwidth.

3. The apparatus of claim 1, wherein at least one of the first circuit block (308) or the second circuit block (316) supports carrier aggregation using multiple component carriers in at least one of the first bandwidth or the second bandwidth, respectively.

4. The apparatus of claim 1, wherein:
the first bandwidth comprises three component carriers for the transmission, and
the first multiplexer comprises a triplexer configured to process the one or more first signals for the transmission based on carrier aggregation using the three component carriers; or
the second bandwidth comprises three component carriers for the reception, and
the second multiplexer comprises a triplexer configured to process the one or more second signals for the reception based on carrier aggregation using the three component carriers.

5. The apparatus of claim 1, wherein at least one of the third circuit block (306) or the fourth circuit block (318) supports carrier aggregation using multiple component carriers in at least one of the third bandwidth or the fourth bandwidth, respectively.

6. The apparatus of claim 1, further comprising:
a first diplexer (304) coupled to the first primary antenna (302) and configured to interface the first circuit block (308) and the third circuit block (306) with the first primary antenna (302); and
a second diplexer (314) coupled to the second primary antenna (318) and configured to interface the second circuit block (316) and the fourth circuit block (318) with the second primary antenna (318).

7. The apparatus of claim 1, wherein:
the third bandwidth comprises two component carriers for at least one of the transmission or the reception; and
the third circuit block (306) comprises a quadplexer configured to process the one or more third signals for the at least one of the transmission or the reception based on carrier aggregation using the two component carriers.

8. The apparatus of claim 1, wherein the fourth circuit block (318) comprises:
one or more filters configured for at least one of transmission or reception over the fourth bandwidth; and
a switching circuit configured to switch, within the fourth bandwidth, the at least one of the transmission or the reception from Ultra High frequency Band, UHB-based communication to Long Term Evolution/Unlicensed, LTEU, Time Division Duplex, TDD-based communication.

9. The apparatus of claim 8, wherein the fourth circuit block (318) further comprises one or more passive duplexers configured to split the LTEU TDD-based communication and the UHB-based communication over bands of the fourth bandwidth.

10. The apparatus of claim 1, wherein the first primary antenna 302 is disposed at a first side of the apparatus and wherein the second primary antenna (318) is placed at a second side of the apparatus opposite the first side.

11. The apparatus of claim 1, wherein the first antenna and the second antenna have different sizes.

12. The apparatus of claim 1, further comprising:
a first secondary antenna (320) configured to support communications in the first frequency range;
a second secondary antenna (328) configured to support communications in the second frequency range;
a fifth circuit block (326) having a fifth multiplexer having filters (504), replicating the first circuit block (308), and coupled to the transceiver (310), the fifth multiplexer having filters (504) configured to process one or more fifth signals for transmission over the first bandwidth via the first secondary antenna (320); and
a sixth circuit block (330) having a sixth multiplexer having filters (604), replicating the second circuit block (316) , and coupled to the transceiver (310), the sixth multiplexer having filters (604) configured to process one or more sixth signals for reception over the second bandwidth via the second secondary antenna (328).

13. A method for wireless communications, comprising:
processing, by a first multiplexer having filters (504) of a first circuit block (308) coupled to a transceiver (310), one or more first signals for only transmission over a first bandwidth in a first frequency range via a first primary antenna (302) configured to support communications in the first frequency range;
processing, by second multiplexer having filters (604) of a second circuit block (316) coupled to the transceiver (310), one or more second signals for only reception over a second bandwidth in a second frequency range via a second primary antenna (318) configured to support communications in the second frequency range different than the first frequency range, wherein the second frequency range partially overlaps the first frequency range and wherein the second bandwidth at least partially overlaps the first bandwidth;
processing, by a third multiplexer having filters (404) of a third circuit block (306) coupled to the transceiver (310), one or more third signals for transmission and reception over a third bandwidth via the first primary antenna (302), the third bandwidth having frequencies lower than frequencies of the first bandwidth; and
processing, by a fourth multiplexer having filters (704) of a fourth circuit block (318) coupled to the transceiver (310), one or more fourth signals for transmission and reception over a fourth bandwidth via the second primary antenna (318), the fourth bandwidth having frequencies higher than frequencies of the second bandwidth.

14. The method of claim 13, wherein the first and second bandwidths range between 1400 MHz and 2800 MHz.

15. The method of claim 13, wherein
the third bandwidth ranges between 700 MHz and 900 MHz; and the fourth bandwidth ranges between 3.4 GHz and 6 GHz.

## Patentansprüche

1. Eine Vorrichtung für drahtlose Kommunikationen, aufweisend:
einen Sendeempfänger (310),
eine erste primäre Antenne (302), die konfiguriert ist zum Unterstützen von Kommunikationen in einem ersten Frequenzbereich,
eine zweite primäre Antenne (312), die konfiguriert ist zum Unterstützen von Kommunikationen in einem zweiten Frequenzbereich, der verschieden von dem ersten Frequenzbereich ist, wobei der zweite Frequenzbereich teilweise mit dem ersten Frequenzbereich überlappt,
einen ersten Schaltungsblock (308), der mit dem Sendeempfänger (310) gekoppelt ist und einen ersten Multiplexer mit Filtern (504) aufweist, die konfiguriert sind zum Verarbeiten eines oder mehrerer erster Signale nur für das Senden über eine erste Bandbreite in dem ersten Frequenzbereich über die erste primäre Antenne (302),
einen zweiten Schaltungsblock (316), der mit dem Sendeempfänger (310) gekoppelt ist und einen zweiten Multiplexer mit Filtern (604) aufweist, die konfiguriert sind zum Verarbeiten eines oder mehrerer zweiter Signale nur für das Empfangen über eine zweite Bandbreite in dem zweiten Frequenzbereich über die zweite primäre Antenne (318), wobei die zweite Bandbreite wenigstens teilweise mit der ersten Bandbreite überlappt,
einen dritten Schaltungsblock (306), der mit dem Sendeempfänger (310) gekoppelt ist und einen dritten Multiplexer mit Filtern (404) aufweist, die konfiguriert sind zum Verarbeiten eines oder mehrerer dritter Signale für das Senden und Empfangen über eine dritte Bandbreite über die erste primäre Antenne (302), wobei die dritte Bandbreite Frequenzen aufweist, die niedriger als die Frequenzen der ersten Bandbreite sind, und
einen vierten Schaltungsblock (318), der mit dem Sendeempfänger (310) gekoppelt ist und einen vierten Multiplexer mit Filtern (704) aufweist, die konfiguriert sind zum Verarbeiten eines oder mehrerer vierter Signale für das Senden und Empfangen über eine vierte Bandbreite über die zweite primäre Antenne (318), wobei die vierte Bandbreite Frequenzen aufweist, die höher als die Frequenzen der zweiten Bandbreite sind.

2. Vorrichtung nach Anspruch 1, wobei die erste Bandbreite gleich der zweiten Bandbreite ist.

3. Vorrichtung nach Anspruch 1, wobei der erste Schaltungsblock (308) und/oder der zweite Schaltungsblock (316) eine Trägeraggregation unter Verwendung von mehreren Komponententrägern jeweils in der ersten Bandbreite und/oder der zweiten Bandbreite unterstützen.

4. Vorrichtung nach Anspruch 1, wobei:
die erste Bandbreite drei Komponententräger für das Senden aufweist, und
der erste Multiplexer einen Triplexer aufweist, der konfiguriert ist zum Verarbeiten des einen oder der mehreren ersten Signale für das Senden basierend auf einer Trägeraggregation unter Verwendung der drei Komponententräger, oder
die zweite Bandbreite drei Komponententräger für das Empfangen aufweist, und
der zweite Multiplexer einen Triplexer aufweist, der konfiguriert ist zum Verarbeiten des einen oder der mehreren zweiten Signale für das Empfangen basierend auf einer Trägeraggregation unter Verwendung der drei Komponententräger.

5. Vorrichtung nach Anspruch 1, wobei der dritte Schaltungsblock (306) und/oder der vierte Schaltungsblock (318) eine Trägeraggregation unter Verwendung von mehreren Komponententrägern jeweils in der dritten Bandbreite und/oder der vierten Bandbreite unterstützen.

6. Vorrichtung nach Anspruch 1, die weiterhin aufweist:
einen ersten Diplexer (304), der mit der ersten primären Antenne (302) gekoppelt ist und konfiguriert ist zum Verbinden des ersten Schaltungsblocks (308) und des dritten Schaltungsblocks (306) mit der ersten primären Antenne (302), und
einen zweiten Diplexer (314), der mit der zweiten primären Antenne (318) gekoppelt ist und konfiguriert ist zum Verbinden des zweiten Schaltungsblocks (316) und des vierten Schaltungsblocks (318) mit der zweiten primären Antenne (318).

7. Vorrichtung nach Anspruch 1, wobei:
die dritte Bandbreite zwei Komponententräger für das Senden und/oder Empfangen aufweist, und
der dritte Schaltungsblock (306) einen Quadplexer aufweist, der konfiguriert ist zum Verarbeiten des einen oder der mehreren dritten Signale für das Senden und/oder Empfangen basierend auf einer Trägeraggregation unter Verwendung der zwei Komponententräger.

8. Vorrichtung nach Anspruch 1, wobei der vierte Schaltungsblock (318) aufweist:
ein oder mehrere Filter, die konfiguriert sind für das Senden und/oder Empfangen über die vierte Bandbreite, und
eine Schaltschaltung, die konfiguriert ist zum Schalten, innerhalb der vierten Bandbreite, des Sendens und/oder des Empfangens von einer UHB (Ultrahochfrequenzband)-basierten Kommunikation zu einer LTEU (Long Term Evolution/Unlicensed)-TDD (Time Division Duplex)-basierten Kommunikation.

9. Vorrichtung nach Anspruch 8, wobei der vierte Schaltungsblock (318) weiterhin einen oder mehrere passive Duplexer aufweist, die konfiguriert sind zum Aufteilen der LTEU-TDD-basierten Kommunikation und der UHBbasierten Kommunikation über Bänder der vierten Bandbreite.

10. Vorrichtung nach Anspruch 1, wobei die erste primäre Antenne (302) auf einer ersten Seite der Vorrichtung angeordnet ist und wobei die zweite primäre Antenne (318) auf einer zweiten Seite der Vorrichtung gegenüber der ersten Seite angeordnet ist.

11. Vorrichtung nach Anspruch 1, wobei die erste Antenne und die zweite Antenne verschiedene Größen aufweisen.

12. Vorrichtung nach Anspruch 1, die weiterhin aufweist.
eine erste sekundäre Antenne (320), die konfiguriert ist zum Unterstützen von Kommunikationen in dem ersten Frequenzbereich,
eine zweite sekundäre Antenne (328), die konfiguriert ist zum Unterstützen von Kommunikationen in dem zweiten Frequenzbereich,
einen fünften Schaltungsblock (326), der einen fünften Multiplexer mit Filtern (504) aufweist, den ersten Schaltungsblock (308) repliziert und mit dem Sendeempfänger (310) gekoppelt ist, wobei der fünfte Multiplexer Filter (504) aufweist, die konfiguriert sind zum Verarbeiten eines oder mehrerer fünfter Signale für das Senden über die erste Bandbreite über die erste sekundäre Antenne (320), und
einen sechsten Schaltungsblock (330), der einen sechsten Multiplexer mit Filtern (604) aufweist, den zweiten Schaltungsblock (316) repliziert und mit dem Sendeempfänger (310) gekoppelt ist, wobei der sechste Multiplexer Filter (604) aufweist, die konfiguriert sind zum Verarbeiten eines oder mehrerer sechster Signale für das Empfangen über die zweite Bandbreite über die zweite sekundäre Antenne (328).

13. Ein Verfahren für drahtlose Kommunikationen, aufweisend:
Verarbeiten, durch einen ersten Multiplexer mit Filtern (504) eines mit einem Sendeempfänger (310) gekoppelten ersten Schaltungsblocks (308), eines oder mehrerer erster Signale für nur ein Senden über eine erste Bandbreite in einem ersten Frequenzbereich über eine erste primäre Antenne (302), die konfiguriert ist zum Unterstützen von Kommunikationen in dem ersten Frequenzbereich,
Verarbeiten, durch einen zweiten Multiplexer mit Filtern (604) eines mit dem Sendeempfänger (310) gekoppelten zweiten Schaltungsblocks (316), eines oder mehrerer zweiter Signale nur für ein Empfangen über eine zweite Bandbreite in einem zweiten Frequenzbereich über eine zweite primäre Antenne (318), die konfiguriert ist zum Unterstützen von Kommunikationen in dem zweiten Frequenzbereich, der von dem ersten Frequenzbereich verschieden ist, wobei der zweite Frequenzbereich teilweise mit dem ersten Frequenzbereich überlappt und wobei die zweite Bandbreite wenigstens teilweise mit der ersten Bandbreite überlappt,
Verarbeiten, durch einen dritten Multiplexer mit Filtern (404) eines mit dem Sendeempfänger (310) gekoppelten dritten Schaltungsblocks (306), eines oder mehrerer dritter Signale für das Senden und Empfangen über eine dritte Bandbreite über die erste primäre Antenne (302), wobei die dritte Bandbreite Frequenzen aufweist, die niedriger als die Frequenzen der ersten Bandbreite sind, und
Verarbeiten, durch einen vierten Multiplexer mit Filtern (704) eines mit dem Sendeempfänger (310) gekoppelten vierten Schaltungsblocks (318), eines oder mehrerer vierter Signale für das Senden und Empfangen über eine vierte Bandbreite über die zweite primäre Antenne (318), wobei die vierte Bandbreite Frequenzen aufweist, die höher als die Frequenzen der zweiten Bandbreite sind.

14. Verfahren nach Anspruch 13, wobei sich die ersten und zweiten Bandbreiten zwischen 1400 MHz und 2800 MHz erstrecken.

15. Verfahren nach Anspruch 13, wobei:
sich die dritte Bandbreite zwischen 700 MHz und 900 MHz erstreckt, und
sich die vierte Bandbreite zwischen 3,4 GHz und 6 GHz erstreckt.

## Revendications

1. Appareil pour communications sans fil, comprenant :
un émetteur-récepteur (310) ;
une première antenne primaire (302) configurée pour prendre en charge des communications dans une première plage de fréquences ;
une deuxième antenne primaire (312) configurée pour prendre en charge des communications dans une deuxième plage de fréquences différente de la première plage de fréquences, dans lequel la deuxième plage de fréquences chevauche partiellement la première plage de fréquences ;
un premier bloc de circuit (308) relié à l'émetteur-récepteur (310) et ayant un premier multiplexeur ayant des filtres (504) configurés pour traiter un ou plusieurs premiers signaux destinés uniquement à une émission sur une première bande passante dans la première plage de fréquences par l'intermédiaire de la première antenne primaire (302) ;
un deuxième bloc de circuit (316) relié à l'émetteur-récepteur (310) et ayant un deuxième multiplexeur ayant des filtres (504) configurés pour traiter un ou plusieurs deuxièmes signaux destiné uniquement à une réception sur une deuxième bande passante dans la deuxième plage de fréquences par l'intermédiaire de la deuxième antenne primaire (318), dans lequel la deuxième bande passante chevauche au moins partiellement la première bande passante ;
un troisième bloc de circuit (306) relié à l'émetteur-récepteur (310) et ayant un troisième multiplexeur ayant des filtres (404) configurés pour traiter un ou plusieurs troisièmes signaux destinés à une émission ou à une réception sur une troisième bande passante fréquences par l'intermédiaire de la première antenne primaire (302), la troisième bande passante ayant des fréquences inférieures aux fréquences de la première bande passante ; et
un quatrième bloc de circuit (318) relié à l'émetteur-récepteur (310) et ayant un quatrième multiplexeur ayant des filtres (704) configurés pour traiter un ou plusieurs quatrièmes signaux destinés à une émission ou à une réception sur une quatrième bande passante par l'intermédiaire de la deuxième antenne primaire (318), la quatrième bande passante ayant des fréquences supérieures aux fréquences de la deuxième bande passante.

2. Appareil selon la revendication 1, dans lequel la première bande passante est égale à la deuxième bande passante.

3. Appareil selon la revendication 1, dans lequel au moins l'un parmi le premier bloc de circuit (308) et le deuxième bloc de circuit (316) prend en charge une agrégation de porteuses utilisant de multiples porteuses composantes dans au moins l'une parmi la première bande passante et la deuxième bande passante, respectivement.

4. Appareil selon la revendication 1, dans lequel :
la première bande passante comprend trois porteuses composantes pour l'émission, et
le premier multiplexeur comprend un triplexeur configuré pour traiter les un ou plusieurs premiers signaux destinés à l'émission sur la base d'une agrégation de porteuses en utilisant les trois porteuses composantes ; ou
la deuxième bande passante comprend trois porteuses composantes pour la réception, et
le deuxième multiplexeur comprend un triplexeur configuré pour traiter les un ou plusieurs deuxièmes signaux destinés à la réception sur la base d'une agrégation de porteuses en utilisant les trois porteuses composantes.

5. Appareil selon la revendication 1, dans lequel au moins un parmi le troisième bloc de circuit (306) et le quatrième bloc de circuit (318) prend en charge l'agrégation de porteuses en utilisant de multiples porteuses composantes dans au moins une parmi la troisième bande passante et la quatrième bande passante, respectivement.

6. Appareil selon la revendication 1, comprenant en outre :
un premier diplexeur (304) relié à la première antenne primaire (302) et configuré pour interfacer le premier bloc de circuit (308) et le troisième bloc de circuit (306) avec la première antenne primaire (302) ; et
un deuxième diplexeur (314) relié à la deuxième antenne primaire (318) et configuré pour interfacer le deuxième bloc de circuit (316) et le quatrième bloc de circuit (318) avec la deuxième antenne primaire (318).

7. Appareil selon la revendication 1, dans lequel :
la troisième bande passante comprend deux porteuses composantes pour au moins une parmi l'émission et la réception ; et
le troisième bloc de circuit (306) comprend un quadplexeur configuré pour traiter les un ou plusieurs troisièmes signaux destinés à l'émission ou la réception sur la base d'une agrégation de porteuses en utilisant les deux porteuses composantes.

8. Appareil selon la revendication 1, dans lequel le quatrième bloc de circuit (318) comprend :
un ou plusieurs filtres configurés pour au moins une parmi une émission ou une réception sur la quatrième bande passante ; et
un circuit de commutation configuré pour commuter, dans la quatrième bande passante, l'au moins une parmi l'émission ou la réception depuis une communication basée sur une bande ultra haute fréquence, UHB, vers une communication basée sur un duplex à répartition dans le temps, TDD, à évolution à long terme/sans licence, LTEU.

9. Appareil selon la revendication 8, dans lequel le quatrième bloc de circuit (318) comprend en outre un ou plusieurs duplexeurs passifs configurés pour diviser la communication basée sur un TDD à LTEU et la communication basée sur une UHB sur des bandes de la quatrième bande passante.

10. Appareil selon la revendication 1, dans lequel la première antenne primaire (302) est disposée d'un premier côté de l'appareil et dans lequel la deuxième antenne primaire (318) est placée d'un deuxième côté de l'appareil opposé au premier côté.

11. Appareil selon la revendication 1, dans lequel la première antenne et la deuxième antenne ont des dimensions différentes.

12. Appareil selon la revendication 1, comprenant en outre :
une première antenne secondaire (320) configurée pour prendre en charge des communications dans la première plage de fréquences ;
une deuxième antenne secondaire (328) configurée pour prendre en charge des communications dans la deuxième plage de fréquences ;
un cinquième bloc de circuit (326) ayant un cinquième multiplexeur ayant des cinquièmes filtres (504), qui réplique le premier bloc de circuit (308), et relié à l'émetteur-récepteur (310), le cinquième multiplexeur ayant des filtres (504) configurés pour traiter un ou plusieurs cinquièmes signaux destinés à une émission sur la première bande passante par l'intermédiaire de la première antenne secondaire (320) ; et
un sixième bloc de circuit (330) ayant un sixième multiplexeur ayant des filtres (604), qui réplique le deuxième bloc de circuit (316), et relié à l'émetteur-récepteur (310), le sixième multiplexeur ayant des filtres (604) configurés pour traiter un ou plusieurs sixièmes signaux destinés à une réception sur la deuxième bande passante par l'intermédiaire de la deuxième antenne secondaire (328).

13. Procédé pour des communications sans fil, comprenant :
le traitement, par un premier multiplexeur ayant des filtres (504) d'un premier bloc de circuit (308) relié à un émetteur-récepteur (310), d'un ou de plusieurs premiers signaux destinés uniquement à une émission sur une première bande passante dans une première plage de fréquences par l'intermédiaire d'une première antenne primaire (302) configurée pour prendre en charge des communications dans la première plage de fréquences ;
le traitement, par un deuxième multiplexeur ayant des filtres (604) d'un deuxième bloc de circuit (316) relié à un émetteur-récepteur (310), d'un ou de plusieurs deuxièmes signaux destinés uniquement à une réception dans une deuxième bande passante dans une deuxième plage de fréquences par l'intermédiaire d'une deuxième antenne primaire (318) configurée pour prendre en charge des communications dans la deuxième plage de fréquences différente de la première plage de fréquences, dans lequel la deuxième plage de fréquences chevauche au moins partiellement la première plage de fréquences et dans lequel la deuxième bande passante chevauche au moins partiellement la première bande passante ;
le traitement, par un troisième multiplexeur ayant des filtres (404) d'un troisième bloc de circuit (306) relié à l'émetteur-récepteur (310), d'un ou de plusieurs troisièmes signaux destinés à une émission ou à une réception sur une troisième bande passante fréquences par l'intermédiaire de la première antenne primaire (302), la troisième bande passante ayant des fréquences inférieures aux fréquences de la première bande passante ; et
le traitement, par un quatrième multiplexeur ayant des quatrièmes filtres (704) d'un quatrième bloc de circuit (318) relié à l'émetteur-récepteur (310), d'un ou de plusieurs quatrièmes signaux destinés à une émission ou à une réception sur une quatrième bande passante par l'intermédiaire de la deuxième antenne primaire (318), la quatrième bande passante ayant des fréquences supérieures aux fréquences de la deuxième bande passante.

14. Procédé selon la revendication 13, dans lequel les première et deuxième bandes passantes sont comprises entre 1 400 MHz et 2 800 MHz.

15. Procédé selon la revendication 13, dans lequel
la troisième bande passante s'étend entre 700 MHz et 900 MHz ; et
la quatrième bande passante s'étend entre 3,4 GHz et 6 GHz.
